# FASCICULE DE BREVET EUROPEEN

(11) **EP 4 393 300 B1**
(45) Date de publication et mention de la délivrance du brevet: **09.07.2025**
(21) Numéro de dépôt: 23220465.1
(22) Date de dépôt: 28.12.2023
(51) Int. Cl.: A01J 25/00, A23C 19/02, A23C 19/05, A23C 19/068

(54) **PROCÉDÉ ET DISPOSITIF DE PRODUCTION DE FROMAGE À PIZZA À PARTIR DE LAIT**
VERFAHREN UND VORRICHTUNG ZUR HERSTELLUNG VON PIZZAKÄSE AUS MILCH
METHOD AND DEVICE FOR PRODUCING PIZZA CHEESE FROM MILK

(30) Priorité: 28.12.2022 BE 202206099
(43) Date de publication de la demande: 03.07.2024
(73) Titulaire: Solarec, 6800 Recogne (BE)
(72) Inventeur: ALVAREZ GUTIERREZ, Arizbeth, 6800 Recogne (BE); GEORGES, Patrick Jean Fernand Gislain, 6800 Recogne (BE); SNEESSENS, Benjamin Baudoin Jonathan Marie, 6800 Recogne (BE); BRÉJARD, Clémentine Jeanne Emma, 6800 Recogne (BE); DIEUDONNÉ, Cédric Roch Françoise Gislain, 6800 Recogne (BE); GEORGES, Florent Jean-Paul Eddy, 6800 Recogne (BE); PONTHOREAU, Laurent Bernard, 6800 Recogne (BE)
(74) Mandataire: Calysta NV

(56) Documents cités:
- EP-A1- 0 818 139
- WO-A2-99/20120
- FR-A1- 2 260 294
- ST-GELAIS D ET AL: "PRODUCTION OF CHEDDAR CHEESE USING MILK ACIDIFIED WITH CARBON DIOXIDE", MILCHWISSENSCHAFT, VV GMBH VOLKSWIRTSCHAFTLICHER VERLAG. MUNCHEN, DE, vol. 52, no. 11, 1 January 1997 (1997-01-01), pages 614 - 618, XP000737251, ISSN: 0026-3788

## Description

### Domaine technique

La présente invention concerne un procédé de production de fromage à pizza à partir de lait.

### L'art antérieur

Afin d'obtenir du fromage à partir de lait, il est nécessaire de faire coaguler le lait. Cette coagulation permet de former du caillé en suspension dans du lactosérum et c'est principalement le caillé, qui après avoir été séparé du lactosérum, évoluera en fromage. Il faut cependant noter que certains fromages sont fabriqués à partir du lactosérum comme, par exemple, la Ricotta.

Il existe 5 grandes catégories de fromages : les fromages frais, les fromages à pâte molle, les fromages à pâte pressée, les fromages à pâte persillée et les fromages à pâte filée. Ces catégories reflètent leur mode de fabrication. En effet, bien que produit à partir du même ingrédient, le lait, les conditions de coagulation et les étapes qui suivent cette coagulation vont définir la catégorie du fromage produit.

Dans le cas des fromages frais, par exemple, le caillé formé au cours de la coagulation est égoutté lentement ce qui implique qu'il est riche en humidité. La masse en matière sèche d'un fromage frais est typiquement comprise entre 20 et 30%. Ce type de fromage doit être conservé au frais et consommé rapidement.

Le fromage à pizza, quant à lui, fait partie de la catégorie des fromages à pâte filée. Il est produit à partir de caillé et est caractérisé par une masse sèche supérieure à 45%. Le caillé est filé dans une étape de texturation ou filage. Le filage est réalisé typiquement de deux manières, à la vapeur ou à l'eau chaude. Il est ensuite texturé, c'est-à-dire malaxé et étiré jusqu'à obtenir un fil épais lisse, long et fondu. Parmi les fromages à pizza, on trouve la mozzarella à pizza qui est à distinguer de la mozzarella en boule ou en tresse par sa teneur en humidité et en matière sèche. En effet, une mozzarella en boule possède une teneur en matière sèche de l'ordre de 46 à 48%, tandis qu'une mozzarella à pizza à une teneur en matière sèche de l'ordre de 50 à 54%.

Il est connu de l'état de la technique un procédé de préparation de caillé dans un coagulateur ouvert en continu tel que dans le document EP0818139.

Malheureusement, ce procédé, bien que prometteur, est généralement utilisé dans la production de fromage frais, typiquement du Cottage cheese, de la Feta. Toutefois, ce document est muet quant aux conditions de coagulation, or celles-ci sont extrêmement variable d'un type de fromage à un autre et l'adaptation d'un procédé existant en cuve vers un coagulateur en continu requiert de nombreux développements puisque les conditions des procédés en cuves ne sont pas aisément transposables aux procédés continus, encore moins aux procédés en coagulateurs en continu.

Comme indiqué précédemment, la présente invention concerne la fabrication de fromage à pizza.

On connait par exemples des documents WO2007027926 et RU2082297, des procédés de fabrications de fromages à pizza indiquant certaines conditions de coagulation. Ces procédés sont généralement des procédés en cuve, par nature discontinu, qui ne permettent pas une production industrielle à haut rendement alors que le marché du fromage à pizza ne cesse de grandir année après année.

On connait aussi le document WO2008063084 qui divulgue un procédé de production de fromage à pizza en continu.

Malheureusement, le procédé décrit, bien qu'étant une tentative de rendre le procédé continu, comporte différentes installations reliées entre elles pour assurer un caractère continu au procédé. En conséquence, ce procédé est contraignant en termes de gestion de flux rendant ainsi très complexe la continuité du procédé.

De plus, les exigences en matière de refroidissement et de chauffage d'un tel procédé, induisent une consommation énergétique élevée en contradiction avec les besoins de notre époque.

### Bref résumé de l'invention

L'objet de l'invention est de fournir un procédé simple, peu énergivore, pour produire du fromage à pizza à partir de lait.

Pour résoudre ce problème, il est prévu suivant l'invention un procédé de production de fromage à pizza à partir de lait comprenant les étapes suivantes :
- une récolte, standardisation des composants du lait et pasteurisation du lait dans un pasteurisateur,
- un stockage et/ou une maturation du lait standardisé,
- une alimentation du lait standardisé et pasteurisé dudit pasteurisateur à un coagulateur en continu,
- une réduction de pH dudit lait standardisé et pasteurisé pour obtenir un lait acidifié,
- un traitement dudit lait acidifié dans ledit coagulateur en continu pour former une suspension contenant du caillé et du lactosérum,
- une séparation du caillé d'une part et du lactosérum d'autre part de ladite suspension contenant du caillé et du lactosérum,
- une récupération dudit lactosérum,
- une formation de fromage à pizza à partir dudit caillé.
Ce procédé est caractérisé en ce que la réduction du pH du lait standardisé et pasteurisé est effectuée par bullage de CO₂ gazeux dans le lait standardisé et pasteurisé, simultanément à l'alimentation susdite, ledit coagulateur en continu comprenant une auge munie d'une pluralité de parois transversales intérieures mobiles entre lesquelles sont définies des cellules, les parois transversales intérieures mobiles étant agencées pour se déplacer en continu longitudinalement au sein de ladite auge et pour ainsi déplacer les cellules à ciel ouvert d'une zone de fermentation à une zone de coagulation, d'une zone de coagulation à une zone de découpe, d'une zone de découpe vers une zone de brassage, ledit traitement du lait acidifié dans un coagulateur en continu comprenant une fermentation du lait acidifié par l'ajout de ferments lactiques pour obtenir un lait additionné de ferments dans ladite zone de fermentation, une coagulation du lait additionné de ferments par l'ajout d'enzymes pour obtenir un caillé initial et le lactosérum dans ladite zone de coagulation , une découpe du caillé initial pour obtenir des morceaux de caillé dans ladite zone de découpe et un brassage des morceaux de caillé et du lactosérum pour obtenir ledit caillé en suspension dans le lactosérum dans ladite zone de brassage.

Suivant l'invention, les étapes de traitement du lait acidifié qui permettent d'obtenir la suspension de caillé et de lactosérum sont mises en œuvre dans une auge munie d'une pluralité de parois transversales intérieures mobiles entre lesquelles sont définies des cellules. Une cellule est donc délimitée par les parois transversales intérieures mobiles et la paroi de l'auge. Les parois transversales intérieures mobiles sont agencées pour se déplacer en continu longitudinalement au sein de ladite auge et déplacent les cellules à ciel ouvert au travers d'une succession de zones. De cette façon, la gestion des flux entre chaque étape du procédé de traitement du lait acidifié est facilitée puisque les cellules se déplacent avec leur volume prédéfini à vitesse constante, ne nécessitant pas d'ajouter des débits et volumes entre chaque étape. Le lait acidifié contenu dans une cellule donnée traverse donc une zone de fermentation, une zone de coagulation, une zone de découpe, et une zone de brassage. Au furet à mesure de l'avancée de la cellule donnée, d'autres cellules en amont sont remplies de lait acidifié et sont mises en mouvement au travers de la succession de zones tandis que les cellules en aval se trouvent déjà à un stade plus avancé du procédé, permettant ainsi une continuité du procédé. Selon l'invention, dans la zone de fermentation, le lait acidifié est fermenté par l'ajout de ferments lactiques pour obtenir un lait additionné de ferments. Dans la zone de coagulation, le lait additionné de ferments est coagulé par l'ajout d'enzymes pour obtenir un caillé initial et le lactosérum. Dans la zone de découpe, le caillé initial est découpé pour obtenir des morceaux de caillé. Dans la zone de brassage, les morceaux de caillé et le lactosérum sont brassés pour obtenir ladite suspension contenant du caillé et du lactosérum.

De plus, selon l'invention, le lait acidifié est obtenu par réduction du pH du lait standardisé et pasteurisé par bullage de CO₂ gazeux dans le lait standardisé et pasteurisé, simultanément à l'alimentation du pasteurisateur au coagulateur en continu. De cette manière, l'acidification est effectuée de manière concomitante au transfert du pasteurisateur au coagulateur en continu, et donc sans nécessiter de passage par une cuve dédiée à cet effet qui serait contraignant en termes de continuité de flux. En effet le CO₂ gazeux se dissout rapidement et de manière uniforme dans le lait standardisé et pasteurisé, ce qui permet d'obtenir de manière efficace et précise un lait acidifié au pH désiré et se déversant à haut débit dans le coagulateur en continu. La rapidité de dissolution du CO₂ gazeux permet, de plus, d'éviter la déminéralisation du lait acidifié.

Il est possible qu'il soit nécessaire ou souhaitable d'effectuer une ou plusieurs étapes additionnelles d'ajustement du pH. Celle-ci peuvent avoir lieu avant ou après l'étape de pasteurisation du lait issu de l'étape de standardisation des composants du lait et peut se faire au moyen d'acide lactique, d'acide acétique, ou d'un équivalent.

Le procédé comprenant en outre de préférence une étape de stockage et/ou de maturation du lait standardisé.

Suivant l'invention, le procédé est continu à partir du pasteurisateur jusqu'à la séparation du caillé d'une part et du lactosérum d'autre part par l'action conjointe d'une acidification rapide et efficace due à l'utilisation de CO₂ gazeux directement dans l'alimentation du coagulateur en continu et aux étapes effectuées dans l'auge du coagulateuren continu par déplacement des cellules et permet une production à très grande capacité de caillé et de lactosérum.

Le volume des cellules est défini, entre autres, par la distance séparant les deux parois transversales intérieures mobiles. L'adaptation du débit d'arrivé du lait acidifié dans le coagulateur en continu permet de modifier le volume de lait contenu dans les cellules, lesquelles se déplacent à vitesse constante, en fonction des paramètres de caillé attendu et des caractéristiques du lait acidifié engagé dans le coagulateur en continu.

L'utilisation de cellules à ciel ouvert est par ailleurs avantageuse pour la facilité d'accès au contenu de la cellule. Cet accès permet facilement un contrôle visuel et par prélèvement du contenu des cellules tout au long de l'étape de traitement dudit lait acidifié dans ledit coagulateur en continu pour former une suspension contenant du caillé et du lactosérum.

Cette facilité d'accès au contenu de la cellule permet l'utilisation d'outils nécessaire au traitement dudit lait acidifié dans ledit coagulateur en continu pour former une suspension contenant du caillé et du lactosérum. Ces outils peuvent être plongés dans la cellule pour prendre part audit traitement et ensuite être retiré de la cellule. Cette indépendance de la cellule et des outils permet de simplifier le nettoyage de ces outils ainsi que leur maintenance. Il est également facile de changer d'outil ou de modifier leur place le long du coagulateur. Ces outils peuvent être, par exemple, un dispositif de prélèvement, un moyen de découpe, un dispositif de brassage, ou tout autre outil nécessaire à l'étape de traitement dudit lait acidifié dans ledit coagulateur en continu pour former une suspension contenant du caillé et du lactosérum.

L'utilisation de cellules à ciel ouvert se déplaçant permet d'utiliser des moyens de découpe pour obtenir des morceaux de caillé réguliers, polyédriques ou prismatiques à section arrondie. L'insertion, par exemple, d'une grille à maille carrée à la suite du passage d'une paroi mobile et maintenue dans la cellule jusqu'à l'arrivée d'une seconde paroi mobile combinée à la rotation rapide d'une lame perpendiculairement à l'axe de déplacement des cellules permet de former des morceaux de caillés cubiques et réguliers. La taille de ces morceaux pouvant être modifiée en modifiant la taille de la maille carrée de ladite grille et le positionnement de ladite lame. Le motif de la grille peut bien entendu être de section rectangulaire, circulaire, ovale, hexagonale, etc....

Les revendications dépendantes se réfèrent à d'autres réalisations avantageuses.

Dans un mode de réalisation, l'ajout d'enzymes de coagulation est un ajout de coagulant. Ce coagulant peut être d'origine animale, végétale, microbienne ou fermentaire. Les enzymes présentent dans le coagulant peuvent être la chymosine et/ou la pepsine et/ou la cyprosine et/ou la cardosine. Le coagulant peut être plus ou moins concentré en enzymes.

Dans un mode de réalisation du procédé selon l'invention, le bullage de CO₂ gazeux dans le lait standardisé et pasteurisé est effectué jusqu'à obtenir un lait acidifié à un pH compris entre 6,3 et 6,7, le lait standardisé et pasteurisé étant refroidi entre le pasteurisateur et le coagulateur en continu jusqu'à une température comprise entre 32°C et 38°C, de telle manière que la fermentation du lait acidifié se déroule à un pH compris entre 6,3 et 6,7 et à une température comprise entre 32°C et 38°C. Cela présente l'avantage que le lait standardisé et pasteurisé ne nécessite pas de passage dans un dispositif de refroidissement puissant à sa sortie du pasteurisateur.

La fermentation du lait acidifié à un pH compris entre 6,3 et 6,7 présente l'avantage que le lait standardisé et pasteurisé ne doit être que légèrement acidifié par l'étape de réduction de pH dudit lait standardisé et pasteurisé pour obtenir un lait acidifié. En effet le lait standardisé et pasteurisé présente un pH compris entre 6,6 et 6,9, typiquement autour de 6,8. Cette légère acidification permet de maintenir de manière avantageuse la composition du lait acidifié proche de la composition du lait standardisé et pasteurisé. Elle permet également de réduire les quantités de CO₂ gazeux nécessaire à l'acidification.

Dans un mode de réalisation, lequel la coagulation du lait additionné de ferments se déroule à un pH compris entre 6,3 et 6,7 et à une température comprise entre 32°C et 38°C. Les conditions de pH et de température de l'étape de coagulation du lait additionné de ferments sont similaires à celle de l'étape de fermentation du lait acidifié qui la précède. Cela permet avantageusement de ne pas devoir chauffer ou refroidir le lait additionné de ferments. Cela permet également de ne pas devoir modifier de façon externe le pH du lait additionné de ferments.

Dans un mode de réalisation, la découpe du caillé initial se déroule à un pH compris entre 6,3 et 6,7 et à une température comprise entre 32°C et 38°C. Les conditions de pH et de température de l'étape de découpe du caillé initial sont similaires à celle de l'étape coagulation du lait additionné de ferments qui la précède. Cela permet avantageusement de ne pas devoir chauffer ou refroidir le caillé initial. Cela permet également de ne pas devoir modifier de façon externe le pH du caillé initial.

Dans un mode de réalisation, le brassage des morceaux de caillé et du lactosérum comprend une étape de chauffe jusqu'à obtenir une température entre 36°C et 43°C pendant laquelle les ferments sont activés de telle manière que le contenu des cellules présentes dans la zone de brassage soit acidifié au furet à mesure de leur avancement jusqu'à obtenir un pH compris entre 5,8 et 6,3. La température lors de l'étape de brassage des morceaux de caillé et du lactosérum est supérieures à la température lors de l'étape de découpe du caillé initial qui la précède. Cette différence est due à un chauffage des morceaux de caillé et du lactosérum lors du brassage. La limitation du chauffage à une seule zone du coagulateur en continu permet de limiter la consommation d'énergie. De plus, la température initiale des morceaux de caillé et du lactosérum est déjà relativement élevée, ce qui implique que le chauffage nécessaire lors de l'étape de brassage est limité. Ceci contribue également à une faible consommation d'énergie. De plus, un chauffage minimal permet de diminuer la perte de matière grasse dans le lactosérum et ainsi de s'assurer d'un meilleur rendement global. Grâce à ce chauffage minimal, la quantité de matière grasse dans le lactosérum se situe aux alentours de 0,3% par rapport à la masse totale tandis qu'elle n'est que de 0,15 à 0,2% en cas de chauffage plus intense. La température initiale des morceaux de caillés et du lactosérum découle, d'une certaine façon, de la température à laquelle le lait acidifié est introduit dans le coagulateur en continu.

Le pH lors de l'étape de brassage des morceaux de caillé et du lactosérum est inférieur au pH lors de l'étape de découpe du caillé initial qui la précède. Cette différence est due à la production d'acide par les ferments contenu dans le milieu. Cette production d'acide étant stimulée par l'augmentation de la température.

Dans un mode de réalisation, 37 à 41 parois transversales intérieures mobiles sont présentes dans l'auge du coagulateur en continu définissant de 36 à 40 cellules, plus particulièrement des cellules de 1300 à 2000 litres et se déplacent à vitesse constante dans le sens longitudinal de l'auge à une vitesse comprise entre 500 mm/min et 750 mm/min. Ce volume est choisi pour permettre une vidange rapide de chaque cellule à la fin du traitement du lait acidifié dans ledit coagulateur en continu pour former une suspension contenant du caillé et du lactosérum. Il est avantageux d'effectuer une vidange rapide de la suspension de caillé et de lactosérum en fin de traitement car les conditions du milieu peuvent évoluer en cours de vidange, notamment le pH, et dégrader la qualité du caillé et/ou du lactosérum. En réduisant le plus possible le temps de vidange, les risques de dégradation sont minimisés, le temps nécessaire à la vidange étant dicté par le volume des cellules.

Le volume des cellules est également choisi pour optimiser la consistance du caillé. En fonction du volume de la cellule, le caillé initial sera divisé en particules plus ou moins fine lors de la découpe. Plus le caillé initial est divisé en particules fines, plus le lactosérum s'égoutte et plus le fromage formé sera sec.

Le volume des cellules est également choisi pour que, en combinaison avec l'utilisation de lait standardisé et pasteurisé non refroidi de manière active, l'inertie thermique du contenu de ces cellules permet de ne pas devoir chauffer ou refroidir le contenu des cellules dans la zone de fermentations, dans la zone de coagulation et dans la zone de découpe et par là même fournir un procédé énergétiquement favorable.

Dans un mode de réalisation, l'étape de récupération et traitement du lactosérum comprend, en outre, les étapes suivantes :
- une pasteurisation et éventuellement un écrémage du lactosérum permettant d'obtenir un lactosérum pasteurisé,
- une concentration par osmose inverse du lactosérum pasteurisé permettant d'obtenir un lactosérum concentré et une eau pure, voire stérile,
- une récupération de l'eau pure, voire stérile dans un réservoir à eau auquel sont reliées les tubulures de nettoyage d'installations.

Le passage du lactosérum pasteurisé dans une étape de concentration par osmose inverse présente l'avantage de produire une eau pure, voire stérile. L'eau pure, voire stérile est alors récupérée dans un réservoir à eau auquel sont reliées les tubulures de nettoyage d'installations afin de pouvoir réutiliser cette eau très propre pour le nettoyage de l'installation agro-alimentaire et ainsi diminuer les ressources naturelles utilisées dans le procédé selon la présente invention.

Dans un mode de réalisation, l'étape de récupération et traitement du lactosérum comprend, en outre, au moins l'une des étapes suivantes :
- un refroidissement du lactosérum à une température comprise entre 4 et 20 °C, de préférence entre 5 et 15°C pendant une période de temps comprise entre 2h et 48h, de préférence entre 12 et 36h permettant d'obtenir un lactosérum refroidi,
- préférentiellement une ultrafiltration du lactosérum concentré permettant de récupérer une phase protéinique.

L'étape d'ultrafiltration du lactosérum concentré pouvant permettre de récupérer dans un mode de réalisation de l'invention, une phase protéinique sous forme de poudre.

Dans un mode de réalisation, le lait est du lait qui a maturé. Le lait collecté est le résultat du rassemblement de la production de plusieurs installations agricoles et de la production de plusieurs jours d'affilée.

De façon surprenante, II a en effet été mis en évidence, que l'utilisation de lait ayant maturé au site de production dans les installations agricoles n'augmente pas la présence de germe et/ou de bactéries dans le lait de manière telle que les standards réglementaires ne seraient plus rencontrés, permettant ainsi d'espacer les collectes jusqu'à 3 jours sans dégrader la qualité des fractions du lait entier collectées.

Ainsi, la maturation permettant d'espacer les collectes dans le temps permet de diminuer la consommation énergétique de la collecte à plusieurs niveaux. Les camions citernes (réfrigérés/thermostatés) collectent plus de lait en une fois, en un nombre de localisation restreint, ce qui diminue la longueur du déplacement, mais aussi le nombre d'arrêt et de redémarrage du camion-citerne, le nombre d'arrêt et de mise en marche du dispositif de pompage mais diminue aussi la durée de la collecte et ainsi la main d'œuvre requise.

De plus, pour l'installation agricole où se trouve le cheptel de vaches laitières, les coûts sont aussi diminués.

En effet, dans l'installation agricole, les vaches laitières du cheptel sont traites chaque jour et les fractions de lait issues de la traite sont rassemblées dans un conteneur réfrigéré. A la suite de la collecte des fractions de lait entier produit par le cheptel au site de production, il est nécessaire de procéder à un nettoyage complet du conteneur. Ce nettoyage nécessite de l'énergie, en particulier pour stériliser le conteneur, de la main d'œuvre et des produits nettoyant. Le fait de ne pas collecter le lait tous les jours permet de diminuer la fréquence de ces nettoyages et ainsi d'augmenter la rentabilité de la production de lait pour le producteur.

De plus, le lait maturé développe des propriétés organoleptiques favorables à la production de fromage à pizza.

Dans un mode de réalisation, l'étape de récupération et de traitement du caillé pour obtenir des blocs de caillé comprend :
- un moulage du caillé dans des moules permettant d'obtenir du caillé conditionné dans des moules,
- une maturation du caillé conditionné dans les moules dans un tunnel de maturation à une température comprise entre 36 et 43 °C formant du caillé maturé conditionné dans des moules,
- un démoulage du caillé maturé et une découpe du caillé maturé pour former des blocs de caillé maturé à filer,
   - une étape de filage durant laquelle les blocs de caillé maturé à filer sont introduits dans un tube contenant de l'eau chaude muni d'une vis sans fin pour déplacer les blocs de caillé maturé dans le tube contenant de l'eau chaude vers un dispositif de trituration agencé pour, à partir des blocs de caillé maturé chauds, structurer et filer la matière et ainsi former un ruban de fromage filé,
   - éventuellement un salage à sec du ruban de fromage filé,
   - un moulage du ruban de fromage filé dans des moules préalablement refroidis pour former des blocs de fromage filé.

Dans un mode de réalisation, l'étape de refroidissement des blocs de fromage à pizza comprend
- Une poursuite du refroidissement des blocs de fromage filé dans les moules préalablement refroidis
- Un démoulage des blocs de fromage filé
- Une immersion des blocs de fromage filé refroidis dans un bain de saumure présentant une concentration en sel suffisante pour permettre le salage des blocs de fromage filé formant les blocs de fromage à pizza et simultanément la flottaison des blocs de fromage à pizza,
- une recirculation de la saumure comprenant une récupération de la saumure, une purification de la saumure récupérée par microfiltration permettant d'obtenir une saumure régénérée et une réintroduction de la saumure régénérée dans le bain de saumure.

D'autres formes de réalisation du procédé suivant l'invention sont indiquées dans les revendications annexées.

La présente invention se rapporte également à un dispositif de fabrication de fromage à pizza comprenant :
- une cuve de stockage réfrigérée pour le stockage de lait récolté,
- éventuellement une écrémeuse en communication fluidique avec la cuve de stockage et/ou un dispositif agencée pour standardiser le lait issu dans la cuve de stockage,
- un pasteurisateur en communication fluidique avec ladite écrémeuse agencée pour pasteuriser le lait standardisé issu de l'écrémeuse,
- un coagulateur en continu comprenant une auge présentant une zone de fermentation agencée pour former un lait additionné de ferments, une zone de coagulation agencée pour former un caillé initial et du lactosérum, une zone de découpe du caillé initial et une zone de brassage dudit caillé en suspension dans le lactosérum, ladite auge étant munie d'une pluralité de parois transversales intérieures mobiles entre lesquelles est définie une cellule, les parois transversales intérieures mobiles étant reliées à des moyens de déplacement agencés pour permettre le déplacement des parois transversales intérieures mobiles à vitesse constante dans une direction longitudinale au sein de ladite auge et pour ainsi déplacer les cellules à ciel ouvert de la zone de fermentation à la zone de coagulation, de la zone de coagulation à la zone de découpe, de la zone de découpe vers la zone de brassage,
- un tube de charge relié au pasteurisateur et à une trémie d'alimentation d'un coagulateur en continu, agencé pour permettre le passage du lait pasteurisé issu du pasteurisateur vers la trémie d'alimentation du coagulateur en continu dans une zone de remplissage d'un coagulateur en continu, le tube de charge étant équipé d'une tubulure reliée à une source de CO₂ agencée pour introduire du CO₂ sous forme gazeux dans le lait standardisé et pasteurisé et permettre le bullage de CO₂ gazeux dans le lait standardisé et pasteurisé pendant le passage du lait standardisé et pasteurisé du pasteurisateur à la trémie d'alimentation du coagulateur en continu et,
- un dispositif de transformation du caillé pour former ledit fromage à pizza.

Selon la présente invention, le tube de charge est équipé d'une tubulure reliée à une source de CO₂. La tubulure reliée à une source de CO₂ est de préférence une tubulure latérale qui alimente le CO₂ dans le lait pasteurisé et standardisé de manière co-courante ou à contre-courant en fonction de l'endroit où la tubulure est embranchée au tube de charge. Alternativement, dans une autre forme de réalisation, la tubulure est une tubulure concentrique au tube de charge et est perforée d'orifices permettant une introduction du CO₂ dans le lait pasteurisé.

Dans une variante avantageuse du dispositif selon la présente invention, le coagulateur en continu est équipé de moyens de découpe au niveau de la zone de découpe, les moyens de découpe étant choisis parmi des grilles de découpe, des couteaux à déplacement bidimensionnel ou tridimensionnel et leur combinaison.

Dans une autre forme de réalisation avantageuse, le coagulateur en continu est équipé de moyens de chauffage au niveau de la zone de brassage.

Plus particulièrement, au sens de la présente invention, le coagulateur en continu comprend de 37 à 41 parois transversales intérieures mobiles présentes dans l'auge du coagulateur en continu définissant de 36 à 40 cellules, plus particulièrement des cellules de 1300 à 2000 litres, lesdites parois transversales intérieures mobiles se déplaçant à vitesse constante dans le sens longitudinal de l'auge comprise entre 500 mm/min et 750 mm/min.

Dans une variante avantageuse de la présente invention, le dispositif de production de fromage à pizza comprend un dispositif de traitement de lactosérum qui lui, comprend une cuve de refroidissement dans laquelle le lactosérum est refroidi à une température comprise entre 4 et 20 °C, de préférence entre 5 et 15°C pendant une période de temps comprise entre 2h et 48h, de préférence entre 12 et 36h permettant d'obtenir un lactosérum refroidit, la cuve de refroidissement étant reliée à une cuve de pasteurisation de lactosérum , éventuellement suivie d'une écrémeuse, permettant d'obtenir un lactosérum pasteurisé, et un dispositif à osmose inverse alimenté par ledit lactosérum pasteurisé formant d'une part un lactosérum concentré et d'autre part une eau pure, voire stérile, collectée dans réservoir à eau auquel sont reliées les tubulures de nettoyage d'installations, ledit dispositif à osmose inverse comprenant une sortie de lactosérum concentré reliée éventuellement à un dispositif d'ultrafiltration agencé pour produire une phase protéinique sous forme de poudre.

Dans un mode préféré de la présente invention, le dispositif de transformation de caillé comprend :
- Un dispositif de raclage agencé pour alimenter une série de moules en caillé permettant d'obtenir du caillé conditionné dans des moules,
- Un tunnel de maturation à chaud, comportant une alimentation par laquelle une série de caillé conditionné dans des moules sont introduits dans le tunnel de maturation, un convoyeur traversant le tunnel de maturation et une sortie de caillé maturé conditionné dans des moules,
- Des moyens de démoulage et des moyens de coupe agencés pour démouler le caillé maturé et le réduire en morceaux formant des blocs de caillé maturé à filer,
- Un tube contenant de l'eau chaude dans lequel une vis sans fin rotative est disposée, agencée pour déplacer les blocs de caillé maturé dans le tube contenant de l'eau chaude vers un dispositif de trituration agencé pour, à partir des blocs de caillé maturé chauds, structurer et filer la matière et ainsi former un ruban de fromage filé,
- Des moyens de moulage alimentés par le ruban de fromage filé et agencé pour mouler le ruban de fromage filé dans des moules préalablement refroidis pour former des blocs de fromage filé,

Dans encore une autre forme de réalisation particulière de la présente invention, le dispositif de production de formage à pizza comprend une cuve de saumure agencé pour contenir une saumure présentant une concentration en sel suffisante pour permettre le salage des blocs de fromage filé formant les blocs de fromage à pizza et simultanément la flottaison des blocs de fromage à pizza, reliée à une alimentation en blocs de fromage filés démoulés et une sortie de blocs de fromage à pizza, ladite cuve de saumure comprenant en outre une boucle de recirculation munie d'une tubulure de récupération de la saumure, d'un dispositif de microfiltration agencé pour purifier la saumure récupérée et obtenir une saumurée régénérée et des moyens de réintroduction de la saumure régénérée dans le bain de saumure.

D'autres formes de réalisation du dispositif selon la présente invention sont indiquées dans les revendications annexées.

D'autres caractéristiques, détails et avantages de l'invention ressortiront de la description donnée ci-après, à titre non limitatif et en faisant référence aux dessins et aux exemples.

### Brève description des dessins

La figure 1 est une description détaillée d'un mode de réalisation d'un coagulateur en continu mis en œuvre dans le procédé selon l'invention.
La figure 2 est un organigramme expliquant les principales étapes du procédé selon la présente invention.
La figure 3 est une description détaillée d'un mode de réalisation d'un tunnel de maturation, d'un dispositif de démoulage, d'un dispositif de découpe des blocs de caillé maturés démoulés mis en œuvre dans le procédé selon l'invention

Sur les figures, les éléments identiques ou analogues portent les mêmes références

### Description détaillée d'une réalisation de l'invention

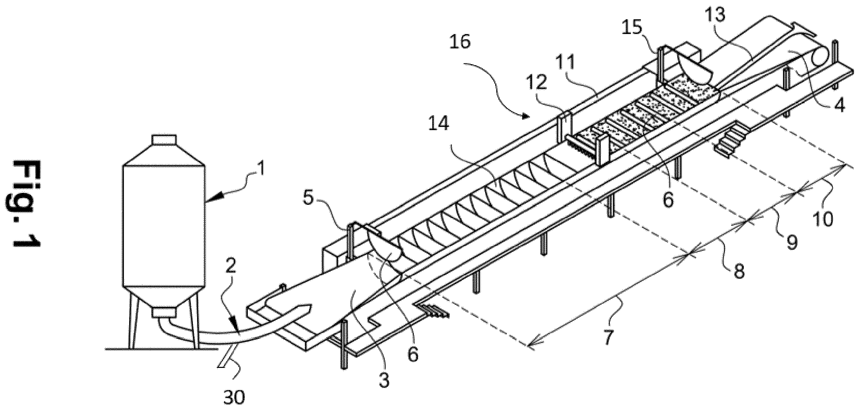

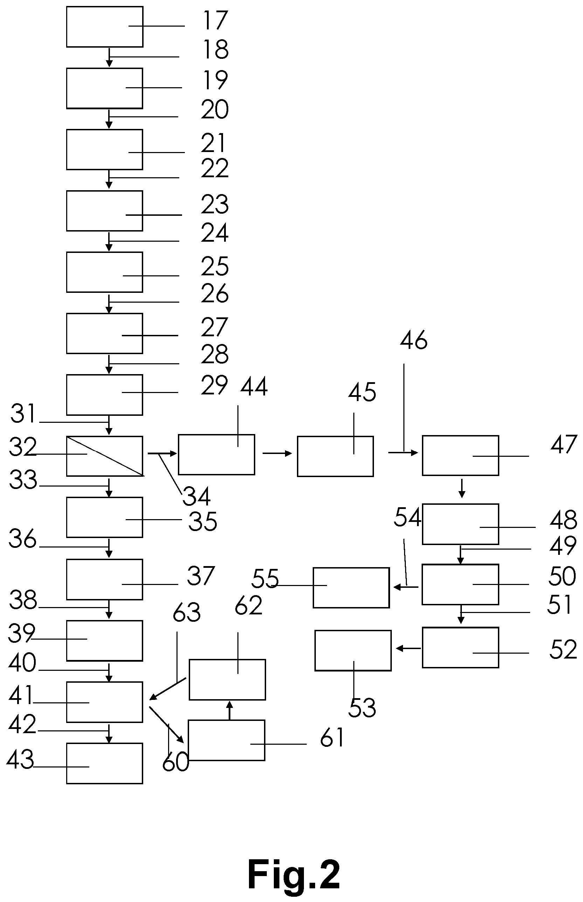

La présente invention concerne un procédé de fabrication de fromage à pizza et le dispositif qui met en œuvre le procédé selon la présente invention
Comme on peut le voir à la figure 1 et à la figure 2, à la suite de la récolte de lait dans une ou plusieurs installations agricoles, le lait récolté est stocké dans une cuve de stockage réfrigérée à une température comprise entre 2 et 10°C.

Le lait récolté est éventuellement du lait qui a maturé. Le lait collecté est en effet, comme mentionné précédemment le résultat du rassemblement de la production de plusieurs installations agricoles et de la production de plusieurs jours d'affilée.

Il est ensuite engagé, par exemple dans une écrémeuse en communication fluidique avec la cuve de stockage, pour subir une standardisation 17 pour ajuster sa teneur en matière grasse et former un lait standardisé 18. La standardisation consiste à enlever la totalité de la crème du lait afin d'obtenir un lait écrémé. Ce lait écrémé est ensuite enrichi en crème pour atteindre une quantité de matière grasse désirée. La standardisation s'effectue plus particulièrement avec de la crème issue de l'écrémage de lait de la veille. En effet, la crème obtenue dans l'écrémeuse est pasteurisée et stockée pendant une journée avant d'être utilisée dans l'étape de standardisation du lait afin d'optimiser la durée des étapes du procédé selon la présente invention et ainsi ne pas être obligé de retarder une étape pour attendre la fin d'une autre.

Cette utilisation de la crème de la veille pour la standardisation du jour présente l'avantage que la crème a eu le temps de cristalliser entre le moment de sa récolte et son utilisation dans la standardisation.

Le lait standardisé 18 est introduit dans un pasteurisateur 1 en communication fluidique avec ladite écrémeuse. Il subit une étape de pasteurisation 19 où il est chauffé à environ 72°C pendant un minimum de 15 secondes afin d'obtenir du lait standardisé et pasteurisé 20.

Le lait peut subir une étape de pasteurisation préliminaire à 76°C pendant un minimum de 15 secondes avant d'être engagé dans l'écrémeuse.

Ce lait standardisé et pasteurisé 20 est refroidi dans une section de refroidissement du pasteurisateur et il alimente au moyen d'un tube de charge 2 une trémie d'alimentation 3 d'une zone de remplissage d'un coagulateur en continu 16.

Cette alimentation s'effectue via le tube de charge 2 relié au pasteurisateur 1 et à la trémie d'alimentation 3 du coagulateur en continu 16. Le tube de charge 2 étant équipé d'une tubulure 30 reliée à une source de CO₂ (non illustrée) agencée pour introduire le CO₂ sous forme gazeux, pendant son passage dans le tube de charge, dans le lait standardisé et pasteurisé 20. La tubulure 30 permet le bullage de CO₂ gazeux dans le lait standardisé et pasteurisé 20 pendant son passage dans le tube de charge 2 du pasteurisateur 1 à la trémie d'alimentation 3 du coagulateur en continu 16. Le débit du CO₂ gazeux est adapté en fonction du pH du lait standardisé et pasteurisé présent dans la trémie d'alimentation 3 du coagulateur en continu 16. Le lait standardisé et pasteurisé 20 présente un pH compris entre 6,6 et 6,9, typiquement autour de 6,8.

La tubulure 30 reliée à la source de CO₂ du tube de charge 2 est de préférence une tubulure latérale qui alimente le CO₂ dans le lait pasteurisé et standardisé 20 de manière co-courante ou à contre-courant en fonction de l'endroit où la tubulure est embranchée au tube de charge. Alternativement, dans une autre forme de réalisation, la tubulure 30 est une tubulure concentrique au tube de charge 2 et est perforée d'orifices permettant une introduction du CO₂ dans le lait pasteurisé.

Le lait qui sort du tube de charge et alimente le coagulateur en continu 16 a ainsi subit une acidification 21 et est ainsi appelé le lait acidifié 22. Il présente une température comprise entre 32°C et 38°C et un pH entre 6,3 et 6,7.

Le coagulateur en continu 16 mesure entre 70 et 100 mètres de long et comprend une auge formée par une bande transporteuse 4 dont les parties latérales sont relevées. L'auge est munie d'une pluralité de parois transversales intérieures mobiles 6 entre lesquelles est définie une cellule 14. Les parois transversales intérieures mobiles 6 sont reliées à des moyens de déplacement agencés pour permettre le déplacement des parois transversales intérieures mobiles 6 à vitesse constante dans une direction longitudinale au sein de ladite auge.

Ces moyens de déplacement peuvent être sous la forme d'une crémaillère disposée latéralement par rapport à l'auge ou peuvent être des moyens de fixation à la bande transporteuse 4 de l'auge.

Le coagulateur en continu 16 comporte de 37 à 41 parois transversales intérieures mobiles 6 dans l'auge définissant de 36 à 40 cellules 14, plus particulièrement des cellules 14 de 1300 à 2000 litres. Les parois transversales intérieures mobiles 6 se déplacent à vitesse constante dans le sens longitudinal de l'auge à une vitesse comprise entre 500 mm/min et 750 mm/min.

La zone de remplissage du coagulateur en continu 16 est située en amont de la zone de fermentation. Durant le remplissage, le lait acidifié est alimenté dans la zone de remplissage, sur la bande transporteuse 14 qui forme, après mise en auge la paroi intérieure de l'auge du coagulateur en continu 16. Le lait acidifié 22 pousse ainsi sur la première paroi transversale intérieure mobile 6. Au fur et à mesure du déplacement de la première paroi transversale intérieure mobile 6, le volume de la zone de remplissage augmente. Lorsque le volume souhaité de lait acidifié est chargé dans la partie mise en auge du coagulateur en continu 16, une nouvelle paroi transversale intérieure mobile 6 est insérée dans l'auge, définissant ainsi une cellule à ciel ouvert contenant un volume déterminé de lait acidifié. Ainsi, la première paroi transversale intérieure mobile 6 devient la deuxième paroi transversale intérieure mobile 6 et la nouvelle paroi transversale intérieure mobile 6 insérée devient la première paroi transversale intérieure mobile 6.

La cellule à ciel ouvert se déplace au sein de l'auge du coagulateur en continu 16, passant ainsi d'une zone de fermentation 7 à une zone de coagulation 8, d'une zone de coagulation 8 à une zone de découpe 9, d'une zone de découpe 9 à une zone de brassage 10.

La zone de fermentation 7 comprend, de préférence un dispositif de mesure du pH, un dispositif de mesure de la température. La zone de fermentation comporte un dispositif d'ajout de ferments permettant de former un lait additionné de ferments 24. La fermentation 23 du lait acidifié 22 se déroule le long de la zone de fermentation 7, à un pH compris entre 6,3 et 6,7 et à une température comprise entre 32°C et 38°C.

La zone de coagulation 8 comprend également de préférence un dispositif de mesure du pH, un dispositif de mesure de la température. La zone de coagulation 8 comprend un dispositif d'ajout d'enzymes permettant de former un caillé initial et du lactosérum. La coagulation 25 du lait additionné de ferments 24 se déroule à un pH compris entre 6,3 et 6,7 et à une température comprise entre 32°C et 38°C.

A l'issue de la coagulation 25, un caillé initial 26 gorgé de lactosérum est obtenu sous forme d'une masse gélatineuse qui est parfois appelée aussi coagulum 26. Le coagulum est alors déplacé dans la zone de découpe 9 pour y subir l'étape de découpe 27.

Le coagulateur en continu est équipé de moyens de découpe 12 au niveau de la zone de découpe 9, les moyens de découpe étant choisis parmi des grilles de découpe, des couteaux à déplacement bidimensionnel ou tridimensionnel et leur combinaison. Le coagulateur en continu est également éventuellement équipé au niveau de la zone de découpe d'un dispositif de mesure du pH, un dispositif de mesure de la température.

L'étape de découpe 27 du caillé initial a donc lieu dans la zone de découpe 9 ; la découpe du caillé initial se déroule à un pH compris entre 6,3 et 6,7 et à une température comprise entre 32°C et 38°C. Durant cette étape, le caillé initial 26 est découpé en morceaux de caillé 28 qui sont en suspension dans le lactosérum 28.

L'insertion, par exemple, d'une grille à maille carrée à la suite du passage d'une paroi mobile et maintenue dans la cellule jusqu'à l'arrivée d'une seconde paroi transversale intérieure mobile 6 combinée à la rotation rapide d'une lame perpendiculairement à l'axe de déplacement des cellules permet de former des morceaux de caillés cubiques et réguliers 28. La taille de ces morceaux pouvant être modifiée en modifiant la taille de la maille carrée de ladite grille et le positionnement de ladite lame.

La suspension de morceaux de caillé 28 dans du lactosérum est alors déplacé vers la zone de brassage 10 pour y subir le brassage 29. Le brassage 29 des morceaux de caillé et du lactosérum comprend une étape de chauffe jusqu'à obtenir une température entre 36°C et 43°C pendant laquelle les ferments sont activés de telle manière que le contenu des cellules 14 présentes dans la zone de brassage 10 soit acidifié au fur et à mesure de leur avancement jusqu'à obtenir un pH compris entre 5,8 et 6,3.

La zone de brassage 10 comprend, de préférence un dispositif de mesure du pH, un dispositif de mesure de la température.

Lesdits morceaux de caillé 28 et lactosérum forment une suspension contenant du caillé et du lactosérum 31 à l'issue de leur passage dans la zone de brassage 10.

Ladite suspension contenant du caillé et du lactosérum 31est engagée dans une étape de séparation 32 dans un dispositif de séparation au moyen d'une communication fluidique 13 reliant la zone de brassage 10 du coagulateur en continu 16 audit dispositif de séparation.

La séparation peut être réalisée par égouttage, filtration, centrifugation et analogue
Comme on peut le voir plus en détail à la figure 2 pour les étapes suivantes du procédé selon la présente invention, la séparation permet de fournir du caillé 33 d'une part et du lactosérum 34 d'autre part.

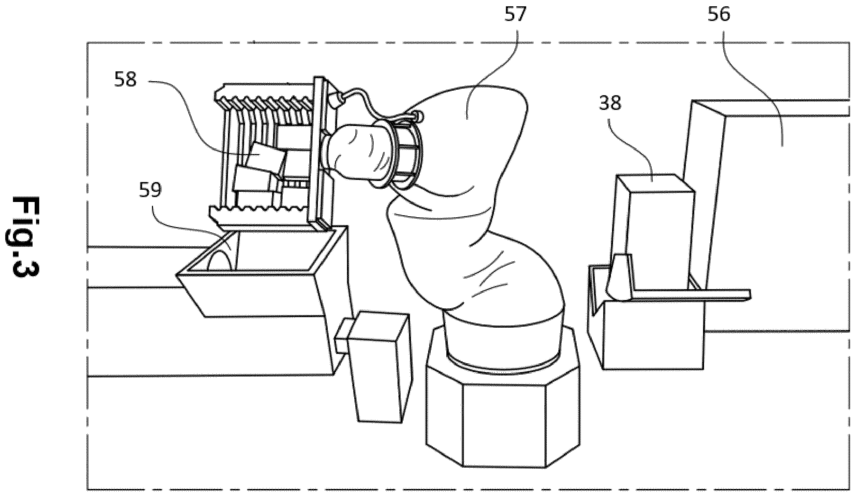

Le lactosérum 34 issu de la séparation 32 est alors récupéré dans une étape de récupération 44 et soumis aux étapes de
- un refroidissement 45 du lactosérum à une température comprise entre 4 et 20 °C, de préférence entre 5 et 15°C pendant une période de temps comprise entre 2h et 48h, de préférence entre 12 et 36h permettant d'obtenir un lactosérum refroidit 46,
- une pasteurisation 47 et éventuellement un écrémage 48 du lactosérum refroidit 46 permettant d'obtenir un lactosérum pasteurisé 49,
- une concentration 50 par osmose inverse du lactosérum pasteurisé 49 permettant d'obtenir un lactosérum concentré 51 et une eau pure, voire stérile 54,
- une récupération 55 de l'eau pure, voire stérile 54 dans un réservoir à eau auquel sont reliées les tubulures de nettoyage d'installations,
- une ultrafiltration 52 du lactosérum concentré 51 permettant de récupérer une phase protéinique sous forme de poudre 53.
Le procédé comprend également un traitement du caillé 33 pour obtenir des blocs de caillé. Ce traitement comprend :
- un moulage 35 du caillé dans des moules permettant d'obtenir du caillé conditionné dans des moules 36,
- une maturation 37 du caillé conditionné dans les moules 36 dans un tunnel de maturation 56 (voir figure 3) à une température comprise entre 36 et 43°C formant du caillé maturé conditionné dans des moules 38,
- un démoulage dans un dispositif automatisé 57 du caillé maturé 58 et une découpe dans un dispositif de découpe 59 du caillé maturé 58 pour former des blocs de caillé maturé à filer (voir figure 3),
- une étape de filage durant laquelle les blocs de caillé maturé à filer sont introduits dans un tube contenant de l'eau chaude muni d'une vis sans fin pour déplacer les blocs de caillé maturé dans le tube contenant de l'eau chaude vers un dispositif de trituration agencé pour, à partir des blocs de caillé maturé chauds, structurer et filer la matière et ainsi former un ruban de fromage filé. Ces étapes, du démoulage au filage sont schématisées par la boîte 39 qui décrit les étapes post-maturation du traitement du caillé à la figure 2.
Après le filage, une série d'étape comprises dans la post-maturation 39 est encore appliquée.
- Le ruban de fromage filé est salé et placé dans des moules pour former des blocs de fromage filé 40,
- Les blocs de fromage filé 40 sont refroidis durant une étape de refroidissement 41 pour obtenir des blocs de fromage à pizza refroidis 42,
- Les blocs de fromage à pizza refroidis 42 sont ensuite emballés dans une étape de conditionnement 43 pour obtenir du fromage à pizza.
Plus particulièrement, le moulage du ruban de fromage filé est réalisé dans des moules préalablement refroidis pour former des blocs de fromage filé 40. Plus particulièrement, le refroidissement des blocs de fromage filé 40 comprend
- Une poursuite du refroidissement des blocs de fromage filé dans les moules préalablement refroidis
- Un démoulage des blocs de fromage filé
- Une immersion des blocs de fromage filé refroidis dans un bain de saumure 60 présentant une concentration en sel suffisante pour permettre le salage des blocs de fromage filé formant les blocs de fromage à pizza refroidis 42 et simultanément la flottaison des blocs de fromage à pizza refroidis 42.
- une recirculation de la saumure comprenant une récupération 61 de la saumure, une purification de la saumure 62 récupérée par microfiltration permettant d'obtenir une saumure régénérée 63
- une réintroduction de la saumure régénérée 63 dans le bain de saumure 60.

Il est bien entendu que la présente invention n'est en aucune façon limitée aux formes de réalisations décrites ci-dessus et que bien des modifications peuvent y être apportées sans sortir du cadre des revendications annexées.

## Revendications

1. Procédé de production de fromage à pizza à partir de lait, de préférence de lait qui a maturé, comprenant les étapes suivantes :
- une récolte, standardisation (17) des composants du lait et pasteurisation (19) du lait dans un pasteurisateur (1) pour obtenir un lait standardisé et pasteurisé (20),
- un stockage et/ou une maturation du lait standardisé,
- une alimentation du lait standardisé et pasteurisé (20) dudit pasteurisateur (1) à un coagulateur en continu (16),
- une réduction de pH (21) dudit lait standardisé et pasteurisé (20) pour obtenir un lait acidifié (22),
- un traitement dudit lait acidifié (22) dans ledit coagulateur en continu (16) pour former une suspension contenant du caillé et du lactosérum (31),
- une séparation (32) du caillé (33) d'une part et du lactosérum d'autre part (34) de ladite suspension contenant du caillé et du lactosérum (31),
- une récupération dudit lactosérum (34),
- une formation de fromage à pizza à partir dudit caillé (33),
**caractérisé en ce que** la réduction du pH (21) du lait standardisé et pasteurisé (20) est effectuée par bullage de CO₂ gazeux dans le lait standardisé et pasteurisé (20), simultanément à l'alimentation susdite, ledit coagulateur en continu (16) comprenant une auge munie d'une pluralité de parois transversales intérieures mobiles (6) entre lesquelles sont définies des cellules (14), les parois transversales intérieures mobiles (6) étant agencées pour se déplacer en continu longitudinalement au sein de ladite auge et pour ainsi déplacer les cellules (14) à ciel ouvert d'une zone de fermentation (7) à une zone de coagulation (8), d'une zone de coagulation (8) à une zone de découpe (9), d'une zone de découpe (9) vers une zone de brassage(10), ledit traitement du lait acidifié (22) dans un coagulateur en continu (16) comprenant une fermentation (23) du lait acidifié (22) par l'ajout de ferments lactiques pour obtenir un lait additionné de ferments (24) dans ladite zone de fermentation (7), une coagulation (25) du lait additionné de ferments (24) par l'ajout d'enzymes, de préférence par l'ajout de coagulant, pour obtenir un caillé initial (26) et du lactosérum (34) dans ladite zone de coagulation (8), une découpe (27) du caillé initial (26) pour obtenir des morceaux de caillé (28) dans ladite zone de découpe (9) et un brassage (29) des morceaux de caillé (28) et du lactosérum (34) pour obtenir ladite suspension contenant du caillé et du lactosérum (31) dans ladite zone de brassage (10).

2. Procédé selon la revendication 1, dans lequel le bullage de CO₂ gazeux dans le lait standardisé et pasteurisé (20) est effectué jusqu'à obtenir un lait acidifié (22) à un pH compris entre 6,3 et 6,7 le lait standardisé et pasteurisé (20) étant refroidi entre le pasteurisateur (1) et le coagulateur en continu (16) jusqu'à une température comprise entre 32°C et 38°C, de telle manière que la fermentation (23) du lait acidifié (22) se déroule à un pH compris entre 6,3 et 6,7 et à une température comprise entre 32°C et 38°C.

3. Procédé selon l'une quelconque des revendications précédentes, dans lequel la coagulation (25) du lait additionné de ferments (24) se déroule à un pH compris entre 6,3 et 6,7 et à une température comprise entre 32°C et 38°C.

4. Procédé selon l'une quelconque des revendications précédentes, dans lequel la découpe (27) du caillé initial (26) se déroule à un pH compris entre 6,3 et 6,7 et à une température comprise entre 32°C et 38°C.

5. Procédé selon l'une quelconque des revendications précédentes, dans lequel le brassage (29) des morceaux de caillé (28) et du lactosérum (34) comprend une étape de chauffe jusqu'à obtenir une température entre 36°C et 43°C pendant laquelle les ferments sont activés de telle manière que le contenu des cellules (6) présentes dans la zone de brassage (10) soit acidifié au fur et à mesure de leur avancement jusqu'à obtenir un pH compris entre 5,8 et 6,3.

6. Procédé selon l'une quelconque des revendications précédentes, dans lequel 37 à 41 parois transversales intérieures mobiles (6) sont présentes dans l'auge du coagulateur en continu définissant de 36 à 40 cellules (14), plus particulièrement des cellules (14) de 1300 à 2000 litres, lesdites parois transversales intérieures mobiles (6) se déplaçant à vitesse constante dans le sens longitudinal de l'auge comprise entre 500 mm/min et 750 mm/min.

7. Procédé selon l'une quelconque des revendications précédentes, dans lequel l'étape de récupération et traitement du lactosérum comprend, en outre, les étapes suivantes :
- une pasteurisation (47) et éventuellement un écrémage (48) du lactosérum (46) permettant d'obtenir un lactosérum pasteurisé (49),
- une concentration (50) par osmose inverse du lactosérum pasteurisé (49) permettant d'obtenir un lactosérum concentré (51) et une eau pure, voire stérile (54),
- une récupération (55) de l'eau pure, voire stérile dans un réservoir à eau auquel sont reliées les tubulures de nettoyage d'installations,
de préférence, l'étape de récupération et traitement du lactosérum comprend, en outre, au moins l'une des étapes suivantes :
- un refroidissement (45) du lactosérum à une température comprise entre 4 et 20 °C, de préférence entre 5 et 15°C pendant une période de temps comprise entre 2h et 48h, de préférence entre 12 et 36h permettant d'obtenir un lactosérum refroidi (46),
- préférentiellement une ultrafiltration (52) du lactosérum concentré permettant de récupérer une phase protéinique.

8. Procédé selon l'une quelconque des revendications précédentes dans lequel l'étape de production de fromage à pizza à partir du caillé comprend en outre les étapes suivantes :
- une récupération et un traitement du caillé pour obtenir des blocs de fromage filé (40),
- un traitement des blocs de fromage filé pour obtenir des blocs de fromage à pizza,
- un refroidissement des blocs de fromage à pizza pour obtenir des blocs de fromage à pizza refroidis (42),
- un emballage des blocs de fromage à pizza refroidis pour obtenir du fromage à pizza.

9. Procédé selon la revendication 8, dans lequel l'étape de récupération et de traitement du caillé pour obtenir des blocs de caillé comprend :
- un moulage (35) du caillé dans des moules permettant d'obtenir du caillé conditionné dans des moules,
- une maturation (37) du caillé conditionné dans les moules dans un tunnel de maturation (56) à une température comprise entre 36 à 43 °C formant du caillé maturé conditionné dans des moules (38),
- un démoulage du caillé maturé et une découpe du caillé maturé pour former des blocs de caillé maturé à filer,
- une étape de filage durant laquelle les blocs de caillé maturé à filer sont introduits dans un tube contenant de l'eau chaude muni d'une vis sans fin pour déplacer les blocs de caillé maturé dans le tube contenant de l'eau chaude vers un dispositif de trituration agencé pour, à partir des blocs de caillé maturé chauds, structurer et filer la matière et ainsi former un ruban de fromage filé,
- éventuellement un salage à sec du ruban de fromage filé,
- un moulage du ruban de fromage filé dans des moules préalablement refroidis pour former des blocs de fromage filé (40),
et/ou dans lequel l'étape de refroidissement des blocs de fromage à pizza comprend
- Une poursuite du refroidissement des blocs de fromage filé dans les moules préalablement refroidis,
- Un démoulage des blocs de fromage filé,
- Une immersion des blocs de fromage filé refroidis dans un bain de saumure (60) présentant une concentration en sel suffisante pour permettre le salage des blocs de fromage filé formant les blocs de fromage à pizza et simultanément la flottaison des blocs de fromage à pizza,
- une recirculation de la saumure comprenant une récupération de la saumure (61), une purification (62) de la saumure récupérée par microfiltration permettant d'obtenir une saumure régénérée (63).
- une réintroduction de la saumure régénérée dans le bain de saumure.

10. Dispositif de production de fromage à pizza comprenant :
- une cuve de stockage réfrigérée pour le stockage de lait récolté,
- éventuellement une écrémeuse en communication fluidique avec la cuve de stockage et/ou un dispositif agencée pour standardiser le lait issu dans la cuve de stockage,
- un pasteurisateur (1) en communication fluidique avec ladite écrémeuse agencée pour pasteuriser le lait standardisé issu de l'écrémeuse,
- un coagulateur en continu (16) comprenant une auge présentant une zone de fermentation (7) agencée pour former un lait additionné de ferments, une zone de coagulation (8) agencée pour former un caillé initial et du lactosérum, une zone de découpe (9) du caillé initial et une zone de brassage (10) dudit caillé en suspension dans le lactosérum, ladite auge étant munie d'une pluralité de parois transversales intérieures mobiles (6) entre lesquelles est définie une cellule (14), les parois transversales intérieures mobiles (6) étant reliées à des moyens de déplacement agencés pour permettre le déplacement des parois transversales intérieures mobiles à vitesse constante dans une direction longitudinale au sein de ladite auge et pour ainsi déplacer les cellules à ciel ouvert de la zone de fermentation (7) à la zone de coagulation (8), de la zone de coagulation (8) à la zone de découpe (9), de la zone de découpe (9) vers la zone de brassage (10),
- un tube de charge (2) relié au pasteurisateur (1) et à une trémie d'alimentation (3) d'un coagulateur en continu, agencé pour permettre le passage du lait pasteurisé issu du pasteurisateur (1) vers la trémie d'alimentation (3) du coagulateur en continu (16) dans une zone de remplissage d'un coagulateur en continu, le tube de charge étant équipé d'une tubulure (30) reliée à une source de CO₂ agencée pour introduire du CO₂ sous forme gazeux dans le lait standardisé et pasteurisé et permettre le bullage de CO₂ gazeux dans le lait standardisé et pasteurisé pendant le passage du lait standardisé et pasteurisé du pasteurisateur à la trémie d'alimentation du coagulateur en continu,
- un dispositif de séparation agencé pour recevoir ledit caillé en suspension dans le lactosérum au moyen d'une connexion fluidique (13) reliant la zone de brassage du coagulateur en continu et ledit dispositif de séparation, le dispositif de séparation comprenant une sortie de caillé d'une part et une sortie de lactosérum d'autre part,
- un dispositif de transformation du caillé pour former ledit fromage à pizza.

11. Dispositif de production de fromage à pizza selon la revendication 10, dans lequel le coagulateur en continu est équipé de moyens de découpe au niveau de la zone de découpe, les moyens de découpe étant choisis parmi des grilles de découpe, des couteaux à déplacement bidimensionnel ou tridimensionnel et leur combinaison, de préférence dans lequel le coagulateur en continu est équipé de moyens de chauffage au niveau de la zone de brassage.

12. Dispositif de production de formage à pizza selon l'une quelconque des revendications 10 ou 11, dans lequel le coagulateur en continu comprend de 37 à 41 parois transversales intérieures mobiles présentes dans l'auge du coagulateur en continu définissant de 36 à 40 cellules, plus particulièrement des cellules de 1300 à 2000 litres, lesdites parois transversales intérieures mobiles se déplaçant à vitesse constante dans le sens longitudinal de l'auge comprise entre 500 mm/min et 750 mm/min.

13. Dispositif selon l'une quelconque des revendications 10 à 12, comprenant en outre un dispositif de traitement de lactosérum comprenant une cuve de refroidissement dans laquelle le lactosérum est refroidi à une température comprise entre 4 et 20 °C, de préférence entre 5 et 15°C pendant une période de temps comprise entre 2h et 48h, de préférence entre 12 et 36h permettant d'obtenir un lactosérum refroidit, la cuve de refroidissement étant reliée à une cuve de pasteurisation de lactosérum, éventuellement suivie d'une écrémeuse, permettant d'obtenir un lactosérum pasteurisé, et un dispositif à osmose inverse alimenté par ledit lactosérum pasteurisé formant d'une part un lactosérum concentré et d'autre part une eau pure, voire stérile, collectée dans réservoir à eau auquel sont reliées les tubulures de nettoyage d'installations.

14. Dispositif de production de fromage à pizza selon l'une quelconque des revendications 10 à 13, dans lequel le dispositif de transformation de caillé comprend :
- Un dispositif de raclage agencé pour alimenter une série de moules en caillé permettant d'obtenir du caillé conditionné dans des moules,
- Un tunnel de maturation (56) à chaud, comportant une alimentation par laquelle une série de caillé conditionné dans des moules sont introduits dans le tunnel de maturation, un convoyeur traversant le tunnel de maturation et une sortie de caillé maturé conditionné dans des moules (38),
- Des moyens de démoulage (57) et des moyens de coupe (59) agencés pour démouler le caillé maturé (58) et le réduire en morceaux formant des blocs de caillé maturé à filer,
- Un tube contenant de l'eau chaude dans lequel une vis sans fin rotative est disposée, agencée pour déplacer les blocs de caillé maturé dans le tube contenant de l'eau chaude vers un dispositif de trituration agencé pour, à partir des blocs de caillé maturé chauds, structurer et filer la matière et ainsi former un ruban de fromage filé,
- Des moyens de moulage alimentés par le ruban de fromage filé et agencé pour mouler le ruban de fromage filé dans des moules préalablement refroidis pour former des blocs de fromage filé,

15. Dispositif de production de fromage à pizza selon l'une quelconque des revendications 10 à 14, comprenant en outre une cuve de saumure agencé pour contenir une saumure présentant une concentration en sel suffisante pour permettre le salage des blocs de fromage filé formant les blocs de fromage à pizza et simultanément la flottaison des blocs de fromage à pizza, reliée à une alimentation en blocs de fromage filés démoulés et une sortie de blocs de fromage à pizza, ladite cuve de saumure comprenant en outre une boucle de recirculation munie d'une tubulure de récupération de la saumure, d'un dispositif de microfiltration agencé pour purifier la saumure récupérée et obtenir une saumurée régénérée et des moyens de réintroduction de la saumure régénérée dans le bain de saumure.

## Patentansprüche

1. Verfahren zur Herstellung von Pizzakäse aus Milch, vorzugsweise aus Milch, die gereift ist, umfassend die folgenden Schritte:
- Erhalten, Standardisieren (17) der Milchbestandteile und Pasteurisieren (19) der Milch in einem Pasteurisierer (1), um eine standardisierte und pasteurisierte Milch (20) zu erlangen,
- Speichern und/oder Reifen der standardisierten Milch,
- Zuführen der standardisierten und pasteurisierten Milch (20) von dem Pasteurisierer (1) zu einem kontinuierlichen Koagulator (16),
- Senken des pHs (21) der standardisierten und pasteurisierten Milch (20), um eine angesäuerte Milch (22) zu erlangen,
- Behandeln der angesäuerten Milch (22) in dem kontinuierlichen Koagulator (16), um eine Suspension zu bilden, die Käsebruch und Molke (31) enthält,
- Trennen (32) des Käsebruchs (33) einerseits und der Molke andererseits (34) von der Suspension (31), die Käsebruch und Molke enthält,
- Auffangen der Molke (34),
- Bilden von Pizzakäse aus dem Käsebruch (33),
**dadurch gekennzeichnet, dass** das Senken des pHs (21) der standardisierten und pasteurisierten Milch (20) durch Einblasen von gasförmigem CO₂ in die standardisierte und pasteurisierte Milch (20) gleichzeitig mit der oben genannten Zufuhr durchgeführt wird, der kontinuierliche Koagulator (16) umfassend einen Trog, der mit einer Vielzahl von beweglichen inneren Querwänden (6) versehen ist, wozwischen Zellen (14) definiert sind, wobei die beweglichen inneren Querwände (6) angeordnet sind, um sich kontinuierlich in Längsrichtung innerhalb des Trogs zu bewegen und um somit die Zellen (14) unter freiem Himmel von einer Fermentationszone (7) zu einer Koagulationszone (8), von einer Koagulationszone (8) zu einer Schneidzone (9), von einer Schneidzone (9) zu einer Zerteilungszone (10) zu bewegen, die Behandlung der angesäuerten Milch (22) in einem kontinuierlichen Koagulator (16) umfassend Fermentieren (23) der angesäuerten Milch (22) durch Hinzufügen von Milchsäurebakterien, um eine mit Fermenten versetzte Milch (24) in der Fermentationszone (7) zu erlangen, Gerinnen (25) der mit Fermenten (24) versetzten Milch durch Hinzufügen von Enzymen, vorzugsweise durch Hinzufügen von Gerinnungseinrichtungen, um einen anfänglichen Käsebruch (26) und Molke (34) in der Gerinnungszone (8) zu erlangen, Schneiden (27) des anfänglichen Käsebruchs (26), um Käsebruchstücke (28) in der Schneidzone (9) zu erlangen, und Rühren (29) der Käsebruchstücke (28) und der Molke (34), um in der Zerteilungszone (10) die Suspension (31) zu erlangen, die Käsebruch und Molke enthält.

2. Verfahren nach Anspruch 1, wobei das Einblasen von gasförmigem CO₂ in die standardisierte und pasteurisierte Milch (20) durchgeführt wird, bis eine angesäuerte Milch (22) mit einem pH zwischen 6,3 und 6,7 erlangt wird, wobei die standardisierte und pasteurisierte Milch (20) zwischen dem Pasteurisierer (1) und dem kontinuierlichen Koagulator (16) auf eine Temperatur zwischen 32 °C und 38 °C abgekühlt wird, sodass das Fermentieren (23) der angesäuerten Milch (22) bei einem pH zwischen 6,3 und 6,7 und bei einer Temperatur zwischen 32 °C und 38 °C erfolgt.

3. Verfahren nach einem der vorherigen Ansprüche, wobei das Gerinnen (25) der mit Fermenten (24) versetzten Milch bei einem pH zwischen 6,3 und 6,7 und bei einer Temperatur zwischen 32 °C und 38 °C erfolgt.

4. Verfahren nach einem der vorherigen Ansprüche, wobei das Schneiden (27) des anfänglichen Käsebruchs (26) bei einem pH zwischen 6,3 und 6,7 und einer Temperatur zwischen 32 °C und 38 °C erfolgt.

5. Verfahren nach einem der vorherigen Ansprüche, wobei das Zerkleinern (29) der Käasebuchstücke (28) und der Molke (34) einen Erhitzungsschritt umfasst, bis eine Temperatur zwischen 36 °C und 43 °C erlangt ist, während dessen die Fermente aktiviert werden, sodass der Inhalt der Zellen (6), die in der Zerkleinerungszone (10) vorhanden sind, im Zuge ihres Voranschreitens angesäuert wird, bis ein pH zwischen 5,8 und 6,3 erlangt ist.

6. Verfahren nach einem der vorherigen Ansprüche, wobei 37 bis 41 bewegliche innere Querwände (6) in dem Trog des kontinuierlichen Koagulators vorhanden sind, der 36 bis 40 Zellen (14), insbesondere Zellen (14) von 1300 bis 2000 Litern, definiert, wobei sich die beweglichen inneren Querwände (6) mit einer konstanten Geschwindigkeit in Längsrichtung des Trogs bewegen, die zwischen 500 mm/min und 750 mm/min liegt.

7. Verfahren nach einem der vorherigen Ansprüche, wobei der Auffang- und Behandlungsschritt von Molke ferner die folgenden Schritte umfasst:
- Pasteurisieren (47) und optional eine Entrahmen (48) der Molke (46), was es ermöglicht, eine pasteurisierte Molke (49) zu erlangen,
- Konzentrieren (50) der pasteurisierten Molke (49) durch Umkehrosmose, was es ermöglicht, eine konzentrierte Molke (51) und reines, sogar steriles Wasser (54) zu erlangen,
- Auffangen (55) von reinem oder sogar sterilem Wasser in einem Wassertank, mit dem die Reinigungsrohrleitungen der Anlagen verbunden sind,
wobei der Auffang- und Behandlungsschritt vorzugsweise ferner mindestens einen der folgenden Schritte umfasst:
- Abkühlen (45) der Molke auf eine Temperatur zwischen 4 und 20 °C, vorzugsweise zwischen 5 und 15 °C, während eines Zeitraums zwischen 2 Std und 48 Std, vorzugsweise zwischen 12 und 36 Std, was es ermöglicht, eine abgekühlte Molke (46) zu erlangen,
- vorzugsweise eine Ultrafiltration (52) der konzentrierten Molke, die es ermöglicht, eine Proteinphase aufzufangen.

8. Verfahren nach einem der vorherigen Ansprüche, wobei der Schritt zur Herstellung von Pizzakäse aus dem Käsebruch ferner die folgenden Schritte umfasst:
- Auffangen und Behandeln des Käsebruchs, um gesponnene Käseblöcke (40) zu erlangen,
- Behandeln der gesponnenen Käseblöcke, um Pizzaköseblöcke zu erlangen,
- Abkühlen der Pizzaköseblöcke, um abgekühlte Pizzaköseblöcke (42) zu erlangen,
- Verpacken der abgekühlten Pizzaköseblöcke, um Pizzakäse zu erlangen.

9. Verfahren nach Anspruch 8, wobei der Auffang- und Behandlungsschritt zum Erlangen von Käsebruchblöcken Folgendes umfasst:
- Formen (35) des Käsebruchs in Formen, was es ermöglicht, in Formen verpackten Käsebruch zu erlangen,
- Reifen (37) des in den Formen verpackten Käsebruchs in einem Reifungstunnel (56) bei einer Temperatur zwischen 36 und 43 °C, wobei der in den Formen (38) verpackte gereifte Käsebruch gebildet wird,
- Entformen des gereiften Käsebruchs und Schneiden des gereiften Käsebruchs, um Blöcke aus gereiftem Käsebruch zu bilden, die gesponnen werden sollen,
- einen Spinnschritt, bei dem die zu spinnenden Blöcke aus gereiftem Käsebruch in ein Rohr mit heißem Wasser eingeführt werden, das mit einer Schnecke versehen ist, um die Blöcke aus gereiftem Käsebruch in dem Rohr mit heißem Wasser zu einer Zerkleinerungsvorrichtung zu bewegen, die angeordnet ist, um aus den heißen Blöcken aus gereiftem Käsebruch das Material zu strukturieren und zu verspinnen und dadurch ein Band aus gesponnenem Köse zu bilden,
- optional Trockensalzen des gesponnenen Käsebands,
- Formen des gesponnenen Käsebands in zuvor abgekühlten Formen, um Blöcke aus gesponnenem Käse (40) zu bilden,
und/oder wobei der Abkühlungsschritt der Pizzaköseblöcke Folgendes umfasst
- weiteres Abkühlen der gesponnenen Käseblöcke in den zuvor abgekühlten Formen,
- Entformen der gesponnenen Käseblöcke,
- Eintauchen der abgekühlten gesponnenen Käseblöcke in ein Solebad (60), das eine Salzkonzentration aufweist, die ausreichend ist, um das Salzen der gesponnenen Käseblöcke, die die Pizzaköseblöcke bilden, und gleichzeitig das Aufschwimmen der Pizzaköseblöcke zu ermöglichen,
- eine Rezirkulation der Sole, umfassend Auffangen der Sole (61), Reinigen (62) der aufgefangenen Sole durch Mikrofiltration, was es ermöglicht, eine regenerierte Sole (63) zu erlangen.
- Wiedereinleiten der regenerierten Sole in das Solebad.

10. Vorrichtung zur Herstellung von Pizzakäse, umfassend:
- einen gekühlten Speicherbehälter zum Speichern der erhaltenen Milch,
- Optional ein Entrahmungsgerät in Fluidverbindung mit dem Speicherbehälter und/oder eine Vorrichtung, die angeordnet ist, um die Milch aus dem Speicherbehälter zu standardisieren,
- einen Pasteurisierer (1) in Fluidverbindung mit dem Entrahmungsgerät, der angeordnet ist, um die standardisierte Milch aus dem Entrahmungsgerät zu pasteurisieren,
- einen kontinuierlichen Koagulator (16), umfassend einen Trog, der eine Fermentationszone (7) aufweist, die angeordnet ist, um eine mit Fermenten versetzte Milch zu bilden, eine Koagulationszone (8), die angeordnet ist, um einen anfänglichen Käsebruch und Molke zu bildet, eine Schneidzone (9) zum Schneiden des anfänglichen Käsebruchs und eine Zerkleinerungszone (10) des in der Molke suspendierten Käsebruchs, wobei der Trog mit einer Vielzahl von beweglichen inneren Querwänden (6) versehen ist, wozwischen eine Zellen (14) definiert ist, die beweglichen inneren Querwände (6) mit Bewegungseinrichtungen verbunden sind, die angeordnet sind, um eine Bewegung der beweglichen inneren Querwände mit konstanter Geschwindigkeit in einer Längsrichtung innerhalb des Trogs zu ermöglichen und dadurch die offenen Zellen von der Fermentationszone (7) zu der Koagulationszone (8), von der Koagulationszone (8) zu der Schneidzone (9), von der Schneidzone (9) zu der Zerkleinerungszone (10) zu bewegen,
- ein Beschickungsrohr (2), das mit dem Pasteurisierer (1) und einem Zufuhrtrichter (3) eines kontinuierlichen Koagulators verbunden ist und angeordnet ist, um den Durchgang von pasteurisierter Milch aus dem Pasteurisierer (1) zu dem Zufuhrtrichter (3) des kontinuierlichen Koagulators (16) in einem Füllbereich eines kontinuierlichen Koagulators zu ermöglichen, wobei das Beschickungsrohr mit einem Rohr (30) ausgestattet ist, das mit einer CO₂-Quelle verbunden ist, die angeordnet ist, um gasförmiges CO₂ in die standardisierte und pasteurisierte Milch einzuleiten und das Einblasen von gasförmigem CO₂ in die standardisierte und pasteurisierte Milch während des Durchlaufs der standardisierten und pasteurisierten Milch von dem Pasteurisierer zu dem Zufuhrtrichter des kontinuierlichen Koagulators zu ermöglichen,
- eine Trennvorrichtung, die angeordnet ist, um den in der Molke suspendierten Käsebruch mittels einer Fluidverbindung (13) aufzunehmen, die den Zerkleinerungsbereich des kontinuierlichen Koagulators und die Trennvorrichtung verbindet, die Trennvorrichtung einerseits umfassend einen Auslass für Käsebruch und andererseits einen Auslass für Molke,
- eine Transformationsvorrichtung des Käsebruchs, um den Pizzakäse zu bilden.

11. Vorrichtung zur Herstellung von Pizzaköse nach Anspruch 10, wobei der kontinuierliche Koagulator auf Ebene der Schneidezone mit Schneideinrichtungen ausgestattet ist, wobei die Schneideinrichtungen ausgewählt sind aus Schneidgittern, zweidimensional oder dreidimensional beweglichen Messern und deren Kombination, vorzugsweise wobei der kontinuierliche Koagulator auf Ebene der Zerkleinerungszone mit Heizeinrichtungen ausgestattet ist.

12. Produktionsvorrichtung für Pizzakäse nach einem der Ansprüche 10 oder 1 1, wobei der kontinuierliche Koagulator 37 bis 41 bewegliche innere Querwände umfasst, die in dem Trog des kontinuierlichen Koagulators vorhanden sind, der 36 bis 40 Zellen, insbesondere Zellen von 1300 bis 2000 Litern, definiert, wobei sich die beweglichen inneren Querwände mit einer konstanten Geschwindigkeit in Längsrichtung des Trogs bewegen, die zwischen 500 mm/min und 750 mm/min liegt.

13. Vorrichtung nach einem der Ansprüche 10 bis 12, ferner umfassend eine Behandlungsvorrichtung für Molke, umfassend einen Kühlbehälter, in dem die Molke auf eine Temperatur zwischen 4 und 20 °C, vorzugsweise zwischen 5 und 15 °C über einen Zeitraum zwischen 2 Std und 48 Std vorzugsweise zwischen 12 und 36 Std, abgekühlt wird, was es ermöglicht, eine abgekühlte Molke zu erlangen, wobei der Kühlbehälter mit einem Pasteurisierungsbehälter für Molke verbunden ist, optional gefolgt von einem Entrahmungsgerät, was es ermöglicht, eine pasteurisierte Molke zu erlangen, und eine Vorrichtung für Umkehrosmose, die mit der pasteurisierten Molke gespeist wird, die einerseits eine konzentrierte Molke und andererseits reines, sogar steriles Wasser bildet, das in einem Wassertank gesammelt wird, mit dem die Reinigungsrohre der Anlagen verbunden sind.

14. Produktionsvorrichtung für Pizzakäse nach einem der Ansprüche 10 bis 13, wobei die Transformationsvorrichtung von Käsebruch Folgendes umfasst:
- eine Schabvorrichtung, die angeordnet ist, um einer Reihe von Formen Käsebruch zuzuführen, die es ermöglichen, in Formen verpackten Käsebruch zu erlangen,
- Wärmereifetunnel (56), umfassend eine Zuführung, durch die eine Reihe von in Formen verpacktem Käsebruch in den Reifungstunnel eingeführt werden, einen Förderer, der den Reifungstunnel durchquert und einen Auslass für gereiften Käsebruch, der in Formen (38) verpackt ist,
- Entformungseinrichtungen (57) und Schneideinrichtungen (59), die angeordnet sind, um den gereiften Käsebruch (58) zu entformen und in Stücke zerkleinern, wodurch Blöcke aus gereiftem Käsebruch gebildet werden, die gesponnen werden sollen,
- ein heißes Wasser enthaltendes Rohr, in dem eine drehende Schnecke angeordnet ist, die angeordnet ist, um die gereiften Kösebruchblöcke in dem heißes Wasser enthaltenden Rohr zu einer Zerkleinerungsvorrichtung zu bewegen, die angeordnet ist, um aus den heißen, gereiften Käsebruchblöcken das Material zu strukturieren und zu verspinnen und somit ein gesponnenes Käseband zu bilden,
- Formeinrichtungen, die mit dem gesponnenen Kösestreifen beschickt werden und angeordnet sind, um das gesponnene Käseband in zuvor abgekühlte Formen einzuformen, um Blöcke aus gesponnenem Käse zu formen,

15. Produktionsvorrichtung für Pizzakäse nach einem der Ansprüche 10 bis 14, ferner umfassend einen Solebehälter, der angeordnet ist, um eine Sole zu enthalten, die eine Salzkonzentration aufweist, die ausreichend ist, um das Salzen der die Pizzaköseblöcke bildenden gesponnenen Käseblöcke und gleichzeitig das Aufschwimmen der Pizzaköseblöcke zu ermöglichen, und der mit einer Zufuhr von entformten gesponnenen Käseblöcken und einem Auslass von Pizzaköseblöcken verbunden ist, der Solebehälter ferner umfassend eine Rezirkulationsschleife, die mit einem Rohr zum Auffangen der Sole, einer Mikrofiltrationsvorrichtung, die angeordnet ist, um die aufgefangene Sole zu reinigen und eine regenerierte Sole zu erlangen, und Einrichtungen zum Wiedereinleiten der regenerierten Sole in das Solebad versehen ist.

## Claims

1. Method for producing pizza cheese from milk, preferably milk which has matured, comprising the following steps:
- a collection, standardisation (17) of the components of the milk and pasteurisation (19) of the milk in a pasteuriser (1) to obtain a standardised and pasteurised milk (20),
- a storage and/or a maturation of the standardised milk,
- a feeding of the standardised and pasteurised milk (20) from said pasteuriser (11) to a continuous coagulator (16),
- a reduction of pH (21) of said standardised and pasteurised milk (20) to obtain a sour milk (22),
- a treatment of said sour milk (22) in said continuous coagulator (16) to form a suspension containing curd and whey (31),
- a separation (32) of the curd (33) on the one hand, and of the whey on the other hand (34) from said suspension containing curd and whey (31),
- a recovery of said whey (34),
- a formation of pizza cheese from said curd (33),
**characterised in that** the reduction of pH (21) of the standardised and pasteurised milk (20) is performed by gaseous CO₂ bubbling in the standardised and pasteurised milk (20), simultaneously to the abovesaid feeding, said continuous coagulator (16) comprising a trough provided with a plurality of moveable inner transverse walls (6) between which cells (14) are defined, the moveable inner transverse walls (6) being arranged to continuously move longitudinally within said trough and to thus move the open cells (14) from a fermentation zone (7) to a coagulation zone (8), from a coagulation zone (8) to a cutting zone (9), from a cutting zone (9) to a stirring zone (10), said treatment of the sour milk (22) in a continuous coagulator (16) comprising a fermentation (23) of the sour milk (22) by adding lactic ferments to obtain a milk with added ferments (24) in said fermentation zone (7), a coagulation (25) of the milk with added ferments (24) by adding enzymes, preferably by adding coagulant, to obtain an initial curd (26) and whey (34) in said coagulation zone (8), a cutting (27) of the initial curd (26) to obtain curd pieces (28) in said cutting zone (9) and a stirring (29) of the curd pieces (28) and whey (34) to obtain said suspension containing curd and whey (31) in said stirring zone (10).

2. Method according to claim 1, wherein the gaseous CO₂ bubbling in the standardised and pasteurised milk (20) is performed until obtaining a sour milk (22) at a pH of between 6.3 and 6.7, the standardised and pasteurised milk (20) being cooled between the pasteuriser (1) and the continuous coagulator (16) to a temperature of between 32°C and 38°C, such that the fermentation (23) of the sour milk (22) occurs at a pH of between 6.3 and 6.7 and at a temperature of between 32°C and 38°C.

3. Method according to any one of the preceding claims, wherein the coagulation (25) of the milk with added ferments (24) occurs at a pH of between 6.3 and 6.7 and at a temperature of between 32°C and 38°C.

4. Method according to any one of the preceding claims, wherein the cutting (27) of the initial curd (26) occurs at a pH of between 6.3 and 6.7 and at a temperature of between 32°C and 38°C.

5. Method according to any one of the preceding claims, wherein the stirring (29) of the curd pieces (28) and of the whey (34) comprises a step of heating up to obtaining a temperature of between 36°C and 43°C during which the ferments are activated, such that the content of the cells (6) present in the stirring zone (10) is sour as they progress, until obtaining a pH of between 5.8 and 6.3.

6. Method according to any one of the preceding claims, wherein 37 to 41 moveable inner transverse walls (6) are present in the trough of the continuous coagulator, defining 36 to 40 cells (14), more specifically cells (14) of 1300 to 2000 litres, said moveable inner transverse walls (6) moving at a constant speed in the longitudinal direction of the trough of between 500mm/min and 750mm/min.

7. Method according to any one of the preceding claims, wherein the step of recovering and treating the whey further comprises, the following steps:
- a pasteurisation (47) and optionally a skimming (48) of the whey (46) making it possible to obtain a pasteurised whey (49),
- a concentration (50) by reverse osmosis of the pasteurised whey (49) making it possible to obtain a concentrated whey (51) and a pure, even sterile, water (54),
- a recovery (55) of the pure, even sterile, water in a water tank, to which the facility cleaning pipes are connected,
preferably, the step of recovering and treating the whey further comprises at least one of the following steps:
- a cooling (45) of the whey to a temperature of between 4°C and 20°C, preferably between 5°C and 15°C for a period of time of between 2 hours and 48 hours, preferably 12 hours and 36 hours, making it possible to obtain a cooled whey (46),
- preferably, an ultrafiltration (52) of the concentrated whey, making it possible to recover a protein phase.

8. Method according to any one of the preceding claims, wherein the step of producing pizza cheese from curd further comprises the following steps:
- a recovery and a treatment of the curd to obtain spun cheese blocks (40),
- a treatment of the spun cheese blocks to obtain pizza cheese blocks,
- a cooling of the pizza cheese blocks to obtain cooled pizza cheese blocks (42),
- a wrapping of the cooled pizza cheese blocks to obtain pizza cheese.

9. Method according to claim 8, wherein the step of recovering and treating the curd to obtain curd blocks comprises:
- a moulding (35) of the curd in moulds, making it possible to obtain curd conditioned in moulds,
- a maturation (37) of the curd conditioned in moulds in a maturation tunnel (56) at a temperature of between 36°C to 43°C forming matured curd conditioned in moulds (38),
- a demoulding of the matured curd and a cutting of the matured curd to form matured curd blocks to be spun,
- a spinning step, during which the matured curd blocks to be spun are introduced into a tube containing hot water provided with a worm screw to move the matured curd blocks in the tube containing hot water to a crushing device arranged to, from the hot matured curd blocks, structure and spin the material and thus form a spun cheese strip,
- optionally, a dry curing of the spun cheese strip,
- a moulding of the spun cheese strip in previously cooled moulds to form spun cheese blocks (40),
and/or wherein the step of cooling the pizza cheese blocks comprises
- A continuation of the cooling of the spun cheese blocks in the previously cooled moulds,
- A demoulding of the spun cheese blocks,
- An immersion of the cooled spun cheese blocks into a brine bath (60) having a sufficient salt concentration to enable the curing of the spun cheese blocks forming the pizza cheese blocks, and simultaneously, the flotation of the pizza cheese blocks,
- a recirculation of the brine comprising a recovery of the brine (61), a purification (62) of the recovered brine by microfiltration, making it possible to obtain a regenerated brine (63).
- a reintroduction of the regenerated brine into the brine bath.

10. Pizza cheese producing device, comprising:
- a refrigerated storage tank, for storing collected milk,
- optionally, a separator in fluid communication with the storage tank and/or a device arranged to standardise the milk coming from the storage tank,
- a pasteuriser (1) in fluid communication with said separator arranged to pasteurise the standardised milk coming from the separator,
- a continuous coagulator (16) comprising a trough having a fermentation zone (7) arranged to form a milk with added ferments, a coagulation zone (8) arranged to form an initial curd and whey, a zone (9) for cutting the initial curd and a zone (10) for stirring said curd suspended in whey, said trough being provided with a plurality of moveable inner transverse walls (6) between which a cell (14) is defined, the moveable inner transverse walls (6) being connected to movement means arranged to enable the movement of the moveable inner transverse walls at a constant speed in a longitudinal direction within said trough and to thus move the open cells from the fermentation zone (7) to the coagulation zone (8), from the coagulation zone (8) to the cutting zone (9), from the cutting zone (9) to the stirring zone (10),
- a filling tube (2) connected to the pasteuriser (1) and to a hopper (3) for feeding a continuous coagulator, arranged to enable the passage of the pasteurised milk coming from the pasteuriser (1) to the hopper (3) for feeding the continuous coagulator (16) in a filling zone of a continuous coagulator, the filling tube being equipped with a pipe (30) connected to a CO₂ source arranged to introduce CO₂ in gaseous form into the standardised and pasteurised milk, and enable the gaseous CO₂ bubbling in the standardised and pasteurised milk during the passage of the standardised and pasteurised milk from the pasteuriser to the hopper for feeding the continuous coagulator,
- a separation device arranged to receive said curd suspended in whey by means of a fluid connection (13) connecting the stirring zone of the continuous coagulator and said separation device, the separation device comprising a curd outlet on the one hand, and a whey outlet on the other hand,
- a device for transforming the curd to form said pizza cheese.

11. Pizza cheese producing device according to claim 10, wherein the continuous coagulator is equipped with cutting means at the cutting zone, the cutting means being chosen from among cutting grills, two-dimensional or three-dimensional moving cutters and their combination, preferably wherein the continuous coagulator is equipped with heating means at the stirring zone.

12. Pizza cheese producing device according to any one of claims 10 or 11, wherein the continuous coagulator comprises 37 to 41 moveable inner transverse walls present in the trough of the continuous coagulator defining 36 to 40 cells, more specifically cells of 1300 to 2000 litres, said moveable inner transverse walls moving at a constant speed in the longitudinal direction of the trough of between 500mm/min and 750mm/min.

13. Device according to any one of claims 10 to 12, further comprising a whey treatment device comprising a cooling tank, in which the whey is cooled to a temperature of between 4°C and 20°C, preferably between 5°C and 15°C for a period of time of between 2 hours and 48 hours, preferably between 12 hours and 36 hours, making it possible to obtain a cooled whey, the cooling tank being connected to a whey pasteurisation tank, optionally followed by a separator, making it possible to obtain a pasteurised whey, and a reserve osmosis device fed by said pasteurised whey forming, on the one hand, a concentrated whey, and on the other hand, a pure, even sterile water, collected in the water tank, to which the facility cleaning pipes are connected.

14. Pizza cheese producing device according to any one of claims 10 to 13, wherein the curd transforming device comprises:
- A scraping device arranged to feed a series of moulds with curd, making it possible to obtain curd conditioned in moulds,
- A hot maturation tunnel (56), comprising a feed, through which a series of curd conditioned in moulds are introduced into the maturation tunnel, a conveyor passing through the maturation tunnel and an outlet for matured curd conditioned in moulds (38),
- Demoulding means (57) and cutting means (59) arranged to demould the matured curd (58) and reduce it into pieces forming matured curd blocks to be spun,
- A tube containing hot water, in which a rotary worm screw is disposed, arranged to move the matured curd blocks in the tube containing hot water to a crushing device arranged to, from the hot matured curd blocks, structure and spin the material and thus form a spun cheese strip,
- Moulding means fed by the spun cheese strip and arranged to mould the spun cheese strip in previously cooled moulds to form spun cheese blocks.

15. Pizza cheese producing device according to any one of claims 10 to 14, further comprising a brine tank arranged to contain a brine having a sufficient salt concentration to enable the curing of spun cheese blocks forming the pizza cheese blocks and simultaneously, the flotation of the pizza cheese blocks, connected to a demoulded spun cheese block feed, and a pizza cheese block outlet, said brine tank further comprising a recirculation loop provided with a brine recovery pipe, of a microfiltration device arranged to purify the recovered brine and obtain a regenerated brine and means for reintroducing the regenerated brine into the brine bath.
